# EUROPÄISCHE PATENTSCHRIFT

(11) **EP 1 337 778 B1**
(45) Veröffentlichungstag und Bekanntmachung des Hinweises auf die Patenterteilung: **29.03.2006**
(21) Anmeldenummer: 01998764.3
(22) Anmeldetag: 28.11.2001
(51) Int. Cl.: F16L 17/10, F16L 21/035

(54) **DICHTANORDNUNG EINER ROHRVERBINDUNG, INSBESONDERE VORTRIEBSROHRVERBINDUNG**
SEALING ARRANGEMENT FOR A PIPE CONNECTION, PARTICULARLY AN ADVANCE PIPE CONNECTION
ENSEMBLE D'ETANCHEITE POUR UN RACCORD DE TUYAUX, NOTAMMENT UN RACCORD DE TUYAUX D'AVANCEMENT

(30) Priorität: 01.12.2000 DE 10060016
(43) Veröffentlichungstag der Anmeldung: 27.08.2003
(73) Patentinhaber: Phoenix AG, 21079 Hamburg (DE)
(72) Erfinder: FAERBER, Peter, 51371 Leverkusen (DE); HÖFT, Heiko, 21435 Rosengarten (DE); SCHLAUTMANN, Frank, 48147 Münster (DE)
(86) Internationale Anmeldenummer: PCT/DE2001/004445
(87) Internationale Veröffentlichungsnummer: WO 2002/044605

(56) Entgegenhaltungen:
- EP-A- 0 479 172
- EP-A- 0 705 999
- EP-A- 0 781 951
- JP-A- 55 044 158
- US-A- 4 296 933
- US-A- 4 693 499

## Beschreibung

Die Erfindung betrifft eine Dichtanordnung einer Rohrverbindung, insbesondere Vortriebsrohrverbindung (DE 38 15 141 A1), bestehend wenigstens aus:
- einem ersten Bauteil, insbesondere in Form eines Spitzendes, das eine umlaufende Nut aufweist, umfassend einen Nutboden und zwei Nutflanken;
- einem zweiten Bauteil, insbesondere in Form einer Muffe mit Stahlmanschette, das in Korrespondenz zum ersten Bauteil einen Ringspalt bildet; sowie
- einem aktivierbaren Dichtring aus elastomerem Werkstoff, umfassend wiederum einen Grundkörper, der in der Nut des ersten Bauteiles einsitzt, und einen Kontaktkörper zum zweiten Bauteil, der den Ringspalt abdichtend überbrückt; wobei
- in den Nutboden wenigstens eine Leitung mündet, durch die ein Medium für die Aktivierung des Dichtringes fließt, wobei der Dichtring derart aktivierbar ist, indem der Grundkörper innerhalb der Nut des ersten Bauteiles in Form eines Kolbens angehoben wird.

In der Patentschrift US 4 693 499 (Fig. 2, 3) wird eine gattungsgemäße Dichtanordnung vorgestellt, dessen Dichtring aktivierbar ist, und zwar in Form einer Kolbendichtung. Das in dieser Patentschrift vorgestellte Kolbenkonzept setzt jedoch zwecks Wirksamwerden der Dichtleistung voraus, dass der Dichtring im Rahmen der Aktivierung soweit aus der Nut des ersten Bauteiles herausgedrückt wird, dass der Spalt zum zweiten Bauteil abdichtend überbrück wird. Dies kann jedoch nicht gewährleistet werden, da beispielsweise durch Verunreinigung im Bereich der Nutöffnung eine Klemmwirkung auftreten kann, die den Bewegungsablauf der Kolbendichtung beeinträchtigt, und zwar gegebenenfalls bis zum völligen Unwirksamwerden der erforderlichen Dichtleistung.

Die Aufgabe der Erfindung bestehet nun darin, eine Dichtanordnung, insbesondere für eine Vortriebsrohrverbindung, bereitzustellen, wobei der Dichtring so aktiviert wird, dass eine stetige Dichtwirkung unter dem Gesichtspunkt einer hohen Belastbarkeit und Lebensdauer erzielt wird.

Gelöst wird diese Aufgabe gemäß Kennzeichen des Patentanspruches 1 dadurch, dass
- der Kontaktkörper als Dichtlippe ausgebildet ist und
- zwischen dem Nutboden und dem Dichtring ein umlaufender schlauchförmiger Körper angeordnet ist, der in Bezug auf den Dichtring ein separates Bauteil ist, wobei die Leitung an den schlauchförmigen Körper angeschlossen ist, so dass im Rahmen der Aktivierung eine Volumenvergrößerung des schlauchförmigen Körpers eintritt, die den Kolbeneffekt bewirkt.

Zweckmäßige Ausgestaltuggen der erfindungsgemäßen Dichtanordnung sind in den Patentansprüchen 2 bis 19 genannt.

Die Erfindung wird nun anhand von Ausführungsbeispielen unter Bezugnahme auf schematische Zeichnungen erläutert. Es zeigen:
- Fig. 1: einen Dichtring mit Dichtlippe;
- Fig. 2 bis 4: eine Dichtanordnung mit einem Dichtring mit Dichtlippe vor dem Einschub (Fig. 2), nach dem Einschub im nicht aktivierten Zustand (Fig. 3) sowie nach dem Einschub im aktivierten Zustand (Fig. 4), und zwar unter Anwendung des Kolbenkonzeptes gemäß US 4 693 499;
- Fig. 5 bis 7: eine erfindungsgemäße Dichtanordnung mit einem Dichtring mit Dichtlippe vor dem Einschub (Fig. 5), nach dem Einschub im nicht aktivierten Zustand (Fig. 6) sowie nach dem Einschub im aktivierten Zustand (Fig. 7), und zwar unter Verwendung eines schlauchförmigen Körpers.

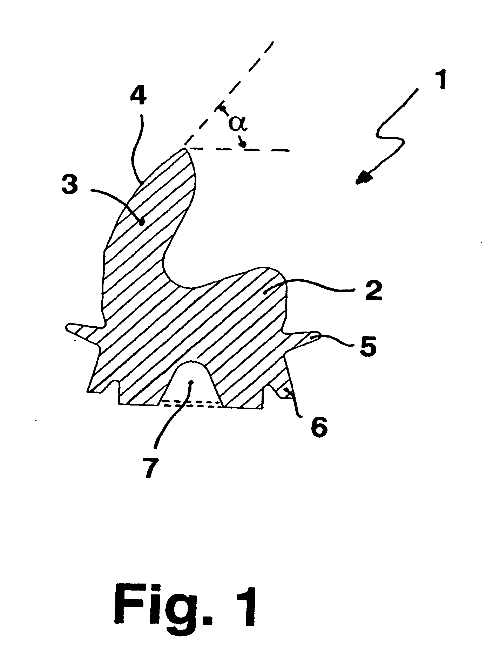

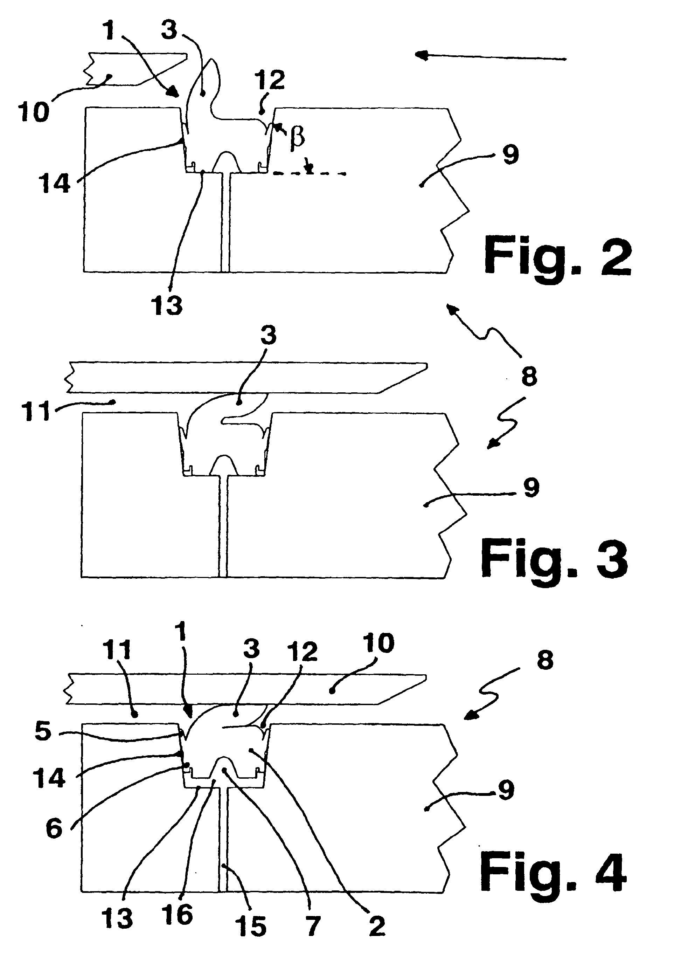

Nach Fig. 1 besteht der Dichtring **1** aus elastomerem Werkstoff aus einem Grundkörper **2** und einer Dichtlippe **3,** die im unbelasteten Zustand, d.h. vor dem Einschub (Fig. 2), einen Neigungswinkel a von 50° bis 80° aufweist. Innerhalb ihres direkten Kontaktbereiches **4** ist die Dichtlippe vorzugsweise mit einer Gleitfolie versehen. Dadurch kann auf weiteres Schmiermittel verzichtet werden.

Des weiteren ist der Grundkörper **2** zu beiden Seiten mit je zwei zusätzlichen Dichtlippen **5** und **6** mit entgegengesetztem Richtungsverlauf ausgestattet. Diese Dichtlippen haben innerhalb der Nut **12** (Fig. 2) eine klemmende und abdichtende Wirkung.

Ferner ist der Grundkörper innerhalb seines Basisbereiches als korrespondierende Kontaktfläche zum Nutboden **13** (Fig. 2) mit einer umlaufenden Profilnut **7** versehen, die offen oder geschlossen (gestrichelte Linienführung) unter Bildung eines Ringkanales sein kann.

Fig. 2 zeigt eine Dichtanordnung **8,** umfassend ein erstes Bauteil 9 aus Beton in Form eines Spitzendes, ein zweites Bauteil **10,** das als Muffe mit Stahimanschette ausgebildet ist, sowie den oben näher vorgestellten Dichtring 1 im unbelasteten Zustand. Die Dichtlippe 3 ist dabei entgegen die Einschubrichtung bzw. Vortriebsrichtung (Pfeilrichtung) geneigt.

Die umlaufende Nut 12 innerhalb des ersten Bauteiles 9 umfasst einen Nutboden 13 und zwei Nutflanken 14, die in einem Winkel β von 70° bis 85° geneigt sind.

Nach Einschub (Fig. 3) des ersten Bauteiles 9 erfolgt eine abdichtende Überbrückung des Ringspaltes 11 durch die Dichtlippe 3. Diese Dichtlippe hat eine ausreichende Stabilität, um dem Bentonitdruck während des Vortriebes standzuhalten.

Fig. 4 zeigt eine Dichtanordnung, bei der der Dichtring 1 zusätzlich aktiviert ist, und zwar im Rahmen eines Aktivierungskonzeptes gemäß US 4 693 499. Dabei mündet in den Nutboden 13 wenigstens eine Leitung 15, durch die das gasförmige oder flüssige Medium für die Aktivierung fließt. Im Rahmen dieses Vorganges bildet sich ein aktivierter Nutraum 16 unter gleichzeitiger Erfassung der hier offenen Profilnut 7. Das Medium steht hier also im direkten Kontakt mit dem Dichtring. Bedingt durch die Dichtlippen 5 und 6 innerhalb der beiden Nutflanken 14 kann das Medium nicht seitlich aus der Nut heraustreten. Durch diese Aktivierungsmaßnahme wird die reine Lippendichtung zusätzlich in eine Kompressionsdichtung überführt. Wegen des Kolbeneffektes kann man den Dichtring 1 auch als Kolbendichtung bezeichnen.

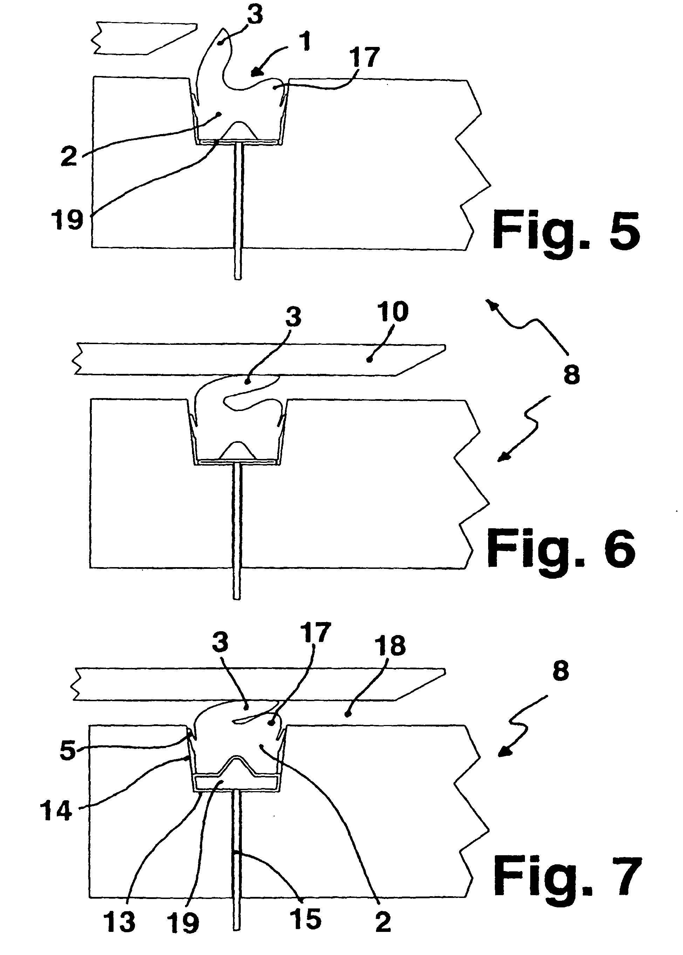

Die Fig. 5 bis 7 zeigen ein enfindungsgemaβes Ausführungsbeispiel einer Dichtanordnung 8 auf, die sich gegenüber der Dichtanordnung gemäß Fig. 2 bis 4. Im wesentlichen durch folgende konstruktiven Merkmale unterscheidet:
- Der Grundkörper 2 des Dichtringes 1 ist mit einem Höcker 17 versehen, an dem die Dichtlippe 3 im belasteten Zustand, insbesondere bei Aktivierung des Dichtringes (Fig. 7), aufsitzen kann. Der Höcker wirkt hier wie ein Anschlagpuffer, verbunden mit verbesserten Elastizitätseigenschaften. Femer wirkt der Höcker als Schutz gegen das Hereinziehen der Dichtlippe in den Restspalt 18.
- Zwischen dem Nutboden 13 und dem Dichtring 1 ist ein umlaufender schlauchförmiger Körper 19 angeordnet, der in Bezug auf den Dichtring ein separates Bauteil ist. An diesen schlauchförmigen Körper ist die Leitung 15 angeschlossen. Im Rahmen der Aktivierung tritt nun eine Volumenvergrößerung des schlauchförmigen Körpers ein, die den Kolbeneffekt bewirkt (Fig. 7).
   Der schlauchförmige Körper **19** besteht aus elastomerem Werkstoff, gegebenenfalls in Verbindung mit einem eingebetteten Festigkeitsträger, oder aus einem Gewebe.
- Im Rahmen dieses Ausführungsbeispiels ist innerhalb der beiden Nutflanken **14** nur das Dichtlippenpaar **5** mit Klemmwirkung vorhanden. Im Gegensatz zu der Dichtanordnung gemäß Fig. 2 bis 4 kann hier auf das zweite Dichtlippenpaar **6** verzichtet werden, da das Medium für die Aktivierung keinen direkten Kontakt mit dem Dichtring **1** hat und somit nicht an den Nutflanken austreten kann.

Hinsichtlich der erfindungsgemäßen Dichtanordnung 8 gemäβ Fig. 5 bis 7 gelten vorzugsweise noch folgende konstruktiven Merkmale:
- Der Dichtring **1** ist vorgespannt, wobei die Vorspannung zweckmäßigerweise 5 % bis 15 % beträgt.
- In Ringrichtung der Nut **12** sind mehrere in Abständen angeordnete Leitungen **15** vorhanden, wobei in Ringrichtung in festgelegten Zyklen eine stufenweise Aktivierung erfolgt.
- Bei einer Reihenschaltung von Rohrverbindungen, insbesondere Vortriebsrohrverbindungen, erfolgt in axialer Richtung in festgelegten Zyklen eine stufenweise Aktivierung.
- Der Nutboden **13** und die beiden Nutflanken **14** werden mit einem Harz behandelt, vorzugsweise bei Verwendung eines ersten Bauteiles 9 aus Beton.

### Bezugszeichenliste:

- **1**: Dichtring
- **2**: Grundkörper
- **3**: Kontaktkörper (Dichtlippe)
- **4**: direkter Kontaktbereich
- **5**: seitliche Dichtlippe
- **6**: seitliche Dichtlippe
- **7**: Profilnut (offen, geschlossen)
- **8**: Dichtanordnung einer Vortriebsrohrverbindung
- **9**: erstes Bauteil (Spitzende)
- **10**: zweites Bauteil (Muffe mit Stahlmanschette)
- **11**: Ringspalt (Muffenspalt)
- **12**: Nut innerhalb des ersten Bauteiles
- **13**: Nutboden
- **14**: Nutflanke
- **15**: Leitung
- **16**: aktivierter Nutraum
- **17**: Höcker
- **18**: Restspalt
- **19**: schlauchförmiger Körper

## Patentansprüche

1. Dichtanordnung (8) einer Rohrverbindung, insbesondere Vortriebsrohrverbindung, bestehend wenigstens aus:
- einem ersten Bauteil (9), insbesondere in Form eines Spitzendes, das eine umlaufende Nut (12) aufweist, umfassend einen Nutboden (13) und zwei Nutflanken (14);
- einem zweiten Bauteil (10), insbesondere in Form einer Muffe mit Stahlmanschette, das in Korrespondenz zum ersten Bauteil (9) einen Ringspalt (11) bildet; sowie
- einem aktivierbaren Dichtring (1) aus elastomerem Werkstoff, umfassend wiederum einen Grundkörper (2), der in der Nut (12) des ersten Bauteiles (9) einsitzt, und einen Kontaktkörper (3) zum zweiten Bauteil (10), der den Ringspalt (11) abdichtend überbrückt; wobei
- in den Nutboden (13) wenigstens eine Leitung (15) mündet, durch die ein Medium für die Aktivierung des Dichtringes (1) fließt, wobei der Dichtring derart aktivierbar ist, indem der Grundkörper (2) innerhalb der Nut (12) des ersten Bauteiles (9) in Form eines Kolbens angehoben wird;
**dadurch gekennzeichnet, dass**
- der Kontaktkörper (3) als Dichtlippe ausgebildet ist und
- zwischen dem Nutboden (13) und dem Dichtring (1) ein umlaufender schlauchförmiger Körper (19) angeordnet ist, der in Bezug auf den Dichtring ein separates Bauteil ist, wobei die Leitung (15) an den schlauchförmigen Körper angeschlossen ist, so dass im Rahmen der Aktivierung eine Volumenvergrößerung des schlauchförmigen Körpers eintritt, die den Kolbeneffekt bewirkt.

2. Dichtanordnung nach Anspruch 1, **dadurch gekennzeichnet, dass** die Dichtlippe (3) im unbelasteten Zustand in Richtung Grundkörper (2) geneigt ist.

3. Dichtanordnung nach Anspruch 2, **dadurch gekennzeichnet, dass** die Dichtlippe (3) in einem Winkel α von 50° bis 80° geneigt ist.

4. Dichtanordnung nach einem der Ansprüche 1 bis 3, **dadurch gekennzeichnet, dass** der Dichtring (1) vorgespannt ist.

5. Dichtanordnung nach Anspruch 4, **dadurch gekennzeichnet, dass** die Vorspannung 5 % bis 15 % beträgt.

6. Dichtanordnung nach einem der Ansprüche 1 bis 5, **dadurch gekennzeichnet, dass** die Dichtlippe (3) innerhalb ihres direkten Kontaktbereiches (4) zum zweiten Bauteil (10) mit einer Gleitfolie versehen ist.

7. Dichtanordnung nach einem der Ansprüche 1 bis 6, **dadurch gekennzeichnet, dass** der Grundkörper (2) einen Höcker (17) aufweist, an dem die Dichtlippe (3) im belasteten Zustand aufsitzen kann.

8. Dichtanordnung nach einem der Ansprüche 1 bis 7, **dadurch gekennzeichnet, dass** der Grundkörper (2) des Dichtringes (1) innerhalb der beiden Nutflanken (14) jeweils mit wenigstens einer zusätzlichen Dichtlippe (5, 6) versehen ist.

9. Dichtanordnung nach Anspruch 8, **dadurch gekennzeichnet, dass** der Grundkörper (2) des Dichtringes (1) innerhalb der beiden Nutflanken (14) jeweils zwei Dichtlippen (5, 6) mit entgegengesetztem Richtungsverlauf aufweist.

10. Dichtanordnung nach einem der Ansprüche 1 bis 9, **dadurch gekennzeichnet, dass** der Grundkörper (2) des Dichtringes (1) innerhalb des Nutbodens (13) mit wenigstens einer umlaufenden offenen oder ganz oder teilweise geschlossenen Profilnut (7) versehen ist.

11. Dichtanordnung nach Anspruch 10, **dadurch gekennzeichnet, dass** der Grundkörper (2) des Dichtringes (1) innerhalb des Nutbodens (13) mit einer einzigen und mittig angeordneten Profilnut (7) versehen ist, die vorzugsweise offen ist.

12. Dichtanordnung nach einem der Ansprüche 1 bis 11, **dadurch gekennzeichnet, dass** die Nutflanken (14) schräg verlaufen, und zwar unter Verringerung der Nutbreite zum Nutboden (13) hin.

13. Dichtanordnung nach Anspruch 12, **dadurch gekennzeichnet, dass** die Nutflanken (14) in einem Winkel β von 70° bis 85° geneigt sind.

14. Dichtanordnung nach einem der Ansprüche 1 bis 13, **dadurch gekennzeichnet, dass** der Nutboden (13) und die beiden Nutflanken (14) mit einem Harz behandelt sind, vorzugsweise bei Verwendung eines ersten Bauteiles (9) aus Beton.

15. Dichtanordnung nach einem der Ansprüche 1 bis 14, **dadurch gekennzeichnet, dass** der Dichtring (1) mittels eines gasförmigen oder flüssigen Mediums aktivierbar ist.

16. Dichtanordnung nach einem der Ansprüch 1 bis 15, **dadurch gekennzeichnet, dass** der schlauchförmige Körper (19) aus elastomerem Werkstoff, gegebenenfalls in Verbindung mit einem eingebetteten Festigkeitsträger, oder aus einem Gewebe besteht.

17. Dichtanordnung nach einem der Ansprüche 1 bis 16, **dadurch gekennzeichnet, dass** in Ringrichtung der Nut (12) mehrere in Abständen angeordnete Leitungen (15) vorhanden sind.

18. Dichtanordnung nach Anspruch 17, **dadurch gekennzeichnet, dass** in Ringrichtung in festgelegten Zyklen eine stufenweise Aktivierung erfolgt.

19. Dichtanordnung nach einem der Ansprüche 1 bis 18, **dadurch gekennzeichnet, dass** bei einer Reihenschaltung von Rohrverbindungen, insbesondere Vortriebsrohrverbindungen, in axialer Rohrrichtung in festgelegten Zyklen eine stufenweise Aktivierung erfolgt.

## Revendications

1. Dispositif d'étanchéité (8) pour une liaison tubulaire, plus particulièrement pour une liaison tubulaire de creusement, comprenant au moins :
- un premier composant (9), plus particulièrement sous la forme d'une extrémité pointue qui comprend une rainure circulaire (12) comprenant un fond de rainure (13) et deux flancs de rainure (14) ;
- un deuxième composant (10), plus particulièrement sous la forme d'un manchon avec une manchette en acier qui forme un interstice annulaire (11) en correspondance avec le premier composant (9) ;
- une bague d'étanchéité (1), pouvant être activée, qui est constituée d'un matériau élastomère, comprenant à nouveau un élément de base (2) qui est logé dans la rainure (12) du premier élément (9) et un élément de contact (3) avec le deuxième composant (10) qui traverse de manière étanche l'interstice annulaire (11) ; moyennant quoi
- dans le fond de la rainure (13) débouche au moins une conduite (15) dans laquelle s'écoule un milieu pour l'activation de la bague d'étanchéité (1), la bague d'étanchéité pouvant être activée en soulevant l'élément de base (2) à l'intérieur de la rainure (12) du premier composant (9) à la manière d'un piston ;
**caractérisé en ce que**
- l'élément de contact (3) est conçu comme une lèvre d'étanchéité et
- entre le fond de la rainure (13) et la bague d'étanchéité (1) se trouve un élément circulaire (19) en forme de tuyau qui est un composant distinct de la bague d'étanchéité, la conduite (15) étant reliée au niveau de l'élément en forme de tuyau de façon à ce que dans le cadre de l'activation, le volume de l'élément en forme de tuyau augmente, ce qui produit un effet de piston.

2. Dispositif d'étanchéité selon la revendication 1, **caractérisé en ce que** la lèvre d'étanchéité (3) est inclinée, dans un état non sollicité en direction de l'élément de base (2).

3. Dispositif d'étanchéité selon la revendication 2, **caractérisé en ce que** la lèvre d'étanchéité (3) est inclinée d'un angle α de 50° à 80°.

4. Dispositif d'étanchéité selon l'une des revendications 1 à 3, **caractérisé en ce que** la bague d'étanchéité (1) est pré-contrainte.

5. Dispositif d'étanchéité selon la revendication 4, **caractérisé en ce que** la pré-contrainte est de 5% à 15%.

6. Dispositif d'étanchéité selon l'une des revendications 1 à 5, **caractérisé en ce que** la lèvre d'étanchéité (3) est munie, à l'intérieur de sa zone de contact direct (4) avec le deuxième composant (10), d'un film de glissement.

7. Dispositif d'étanchéité selon l'une des revendications 1 à 6, **caractérisé en ce que** l'élément de base (2) comprend une bosse (17) sur laquelle la lèvre d'étanchéité (3) peut s'appuyer lorsqu'elle est sollicitée.

8. Dispositif d'étanchéité selon l'une des revendications 1 à 7, **caractérisé en ce que** l'élément de base (2) de la bague d'étanchéité (1) est muni, à l'intérieur des deux flancs de rainure (14), d'au moins une lèvre d'étanchéité supplémentaire (5, 6).

9. Dispositif d'étanchéité selon la revendication 8, **caractérisé en ce que** l'élément de base (2) de la bague d'étanchéité (1) comprend, à l'intérieur des deux flancs de rainure (14), deux lèvres d'étanchéité (5, 6) avec des directions opposées.

10. Dispositif d'étanchéité selon l'une des revendications 1 à 9, **caractérisé en ce que** l'élément de base (2) de la bague d'étanchéité (1) est muni, à l'intérieur du fond de la rainure (13), d'au moins une rainure profilée circulaire (7) ouverte ou complètement ou partiellement fermée.

11. Dispositif d'étanchéité selon la revendication 10, **caractérisé en ce que** l'élément de base (2) de la bague d'étanchéité (1) est muni, à l'intérieur du fond de la rainure (13), d'une seule rainure profilée (7) centrale qui est de préférence ouverte.

12. Dispositif d'étanchéité selon l'une des revendications 1 à 11, **caractérisé en ce que** les flancs de la rainure (14) sont obliques, ce qui réduit la largeur de la rainure vers le fond de la rainure (13).

13. Dispositif d'étanchéité selon la revendication 12, **caractérisé en ce que** les flancs de la rainure (14) sont inclinés d'un angle β de 70° à 85°.

14. Dispositif d'étanchéité selon l'une des revendications 1 à 13, **caractérisé en ce que** le fond de la rainure (13) et les deux flancs de la rainure (14) sont traités avec une résine, de préférence lors de l'utilisation d'un premier composant (9) en béton.

15. Dispositif d'étanchéité selon l'une des revendications 1 à 14, **caractérisé en ce que** la bague d'étanchéité (1) peut être activée à l'aide d'un milieu gazeux ou liquide.

16. Dispositif d'étanchéité selon l'une des revendications 1 à 15, **caractérisé en ce que** l'élément en forme de tuyau (19) est constitué d'un matériau élastomère, le cas échéant en liaison avec un support de ténacité intégré, ou d'un tissu.

17. Dispositif d'étanchéité selon l'une des revendications 1 à 16, **caractérisé en ce que**, dans la direction de la bague de la rainure (12), se trouvent plusieurs conduites (15) disposées à des intervalles réguliers.

18. Dispositif d'étanchéité selon la revendication 17, **caractérisé en ce que**, dans la direction de la bague, une activation par paliers est effectuée par cycles fixes.

19. Dispositif d'étanchéité selon l'une des revendications 1 à 18, **caractérisé en ce que**, lors d'un branchement en série de liaisons tubulaires, plus particulièrement de liaisons tubulaires de creusement, une activation par paliers est effectuée par cycles fixes dans la direction axiale des tubes.

## Claims

1. Sealing arrangement (8) for a pipe connection, in particular a driving pipe connection, consisting at least of:
- a first component (9), in particular in the form of a pointed end which exhibits a circumferential groove (12) comprising a groove bottom (13) and two groove flanks (14);
- a second component (10), in particular in the form of a socket with a steel sleeve which in corresponding with the first component (9) forms an annular gap (11), and
- an activatable sealing ring (1) made of elastomer material, again comprising a base body (2) which sits in the groove (12) in the first component (9), and a contact body (3) for contact with the second component (10) which sealingly bridges the annular gap (11);
wherein at least one line (15) debouches into the groove bottom (13) and through which flows a medium for activation of the sealing ring (1), the sealing ring being activatable in that the base body (2) is raised in the form of a piston inside the groove (12) in the first component (9),
**characterised in that**
- the contact body (3) is embodied as a sealing lip and
- arranged between the groove bottom (13) and the sealing ring (1) there is a circumferential tubular body (19) which is a separate component from the sealing ring, the line (15) being connected to the tubular body so that during the activation the volume of the tubular body is increased, producing the piston effect.

2. Sealing arrangement according to claim 1, **characterised in that** in the load free state the sealing lip (3) is inclined in the direction of the base body (2).

3. Sealing arrangement according to claim 2, **characterised in that** the sealing lip (3) is inclined at an angle α of 50° to 80°.

4. Sealing arrangement according to one of claims 1 to 3, **characterised in that** the sealing ring (1) is preloaded.

5. Sealing arrangement according to claim 4, **characterised in that** the preloading is 5% to 15%.

6. Sealing arrangement according to one of claims 1 to 5, **characterised in that** the sealing lip (3) is provided with a lubricating film within its area (4) of direct contact with the second component (10).

7. Sealing arrangement according to one of claims 1 to 6, **characterised in that** the base body (2) exhibits a bulge (17) on which the sealing lip (3) can sit in the loaded state.

8. Sealing arrangement according to one of claims 1 to 7, **characterised in that** the base body (2) of the sealing ring (1) inside the two groove flanks (14) is in each case provided with at least one additional sealing lip (5, 6).

9. Sealing arrangement according to claim 8, **characterised in that** the base body (2) of the sealing ring (1) inside the two groove flanks (14) in each case exhibits two sealing lips (5, 6) running in opposite directions.

10. Sealing arrangement according to one of claims 1 to 9, **characterised in that** the base body (2) of the sealing ring (1) inside the groove bottom (13) is provided with at least one circumferential, open or wholly or partly closed profile groove (7).

11. Sealing arrangement according to claim 10, **characterised in that** the base body (2) of the sealing ring (1) inside the groove bottom (13) is provided with a single, centrally disposed profiled groove (7) which is preferably open.

12. Sealing arrangement according to one of claims 1 to 11, **characterised in that** the groove flanks (14) run obliquely, reducing the groove width towards the groove bottom (13).

13. Sealing arrangement according to claim 12, **characterised in that** the groove flanks (14) are inclined at an angle β of 70° to 85°.

14. Sealing arrangement according to one of claims 1 to 13, **characterised in that** the groove bottom (13) and the two groove flanks (14) are treated with a resin, preferably when using a first component (9) made of concrete.

15. Sealing arrangement according to one of claims 1 to 14, **characterised in that** the sealing ring (1) can be activated by means of a gaseous or liquid medium.

16. Sealing arrangement according to one of claims 1 to 15, **characterised in that** the tubular body (19) is made of an elastomer material, possibly in combination with an embedded strength member, or of a woven fabric.

17. Sealing arrangement according to one of claims 1 to 16, **characterised in that** a plurality of lines (15) arranged at intervals are present in the annular direction of the groove (12).

18. Sealing arrangement according to claim 17, **characterised in that** progressive activation takes place in the annular direction in fixed cycles.

19. Sealing arrangement according to one of claims 1 to 18, **characterised in that** when pipe connections, in particular driving pipe connections, are arranged in series, progressive activation takes place in the axial direction of the pipe in fixed cycles.
